# EUROPÄISCHE PATENTSCHRIFT

(11) **EP 1 300 348 B1**
(45) Veröffentlichungstag und Bekanntmachung des Hinweises auf die Patenterteilung: **23.08.2006**
(21) Anmeldenummer: 02020365.9
(22) Anmeldetag: 12.09.2002
(51) Int. Cl.: B65G 1/137

(54) **Verfahren und System zum Be- und Entladen von Lieferfahrzeugen**
Method and device for loading and unloading delivery vehicles
Procédé et dispositif pour le chargement et déchargement d'un véhicule de livraison

(30) Priorität: 08.10.2001 DE 10149454
(43) Veröffentlichungstag der Anmeldung: 09.04.2003
(73) Patentinhaber: Kern, Peter E., 64354 Reinheim (DE)
(72) Erfinder: Kern, Peter E., 64354 Reinheim (DE)
(74) Vertreter: Lieke, Winfried

(56) Entgegenhaltungen:
- EP-A- 0 169 156
- WO-A-01/56907
- DE-U- 29 900 899
- US-A- 4 814 742
- HEPTNER K HEPTNER K: "METHODEN DER WARENVERTEILUNG UND AUFTRAGSZUSAMMENSTELLUNG IN DER USA.METHODS OF GOODS DISTRIBUTION AND ORDER FILLING IN THE UNITED STATES" , FORDERN UND HEBEN, KRAUSSKOPF VERLAG FUR WIRTSCHAFT. MAINZ, DE, VOL. 19, NR. 12, PAGE(S) 727-732 XP000670542 ISSN: 0341-2636 * das ganze Dokument *

## Beschreibung

Die vorliegende Erfindung betrifft ein Verfahren zum Be- und Entladen von Lieferfahrzeugen, welche Pakete oder dergleichen von einer Verteilerstelle zu mehreren verschiedenen Lieferadressen transportieren, wobei die Pakete in einer im allgemeinen zufälligen Reihenfolge am Verteiler bereitgestellt werden.

Ebenso betrifft die vorliegende Erfindung auch ein entsprechendes System zum Be- und Entladen von Lieferfahrzeugen.

Aus der EP-A-0 169 156 ist ein robotisierter, selbstgetriebener Handhabungswagen für Warenlager bekannt, der von einem zentralen Computer gesteuert Waren aus einem Warenlager automatisch entnehmen und die Warenvorräte in dem Lager nachfüllen kann, wobei die Waren bzw. die Verpakkungs- bzw. Transportbehälter der Waren mit einer Kennung versehen sind, die von einem Lesegerät an dem Handhabungswagen erfaßt werden können.

Die US-4,814,742 befaßt sich mit einem Suchsystem, um Gegenstände in einem Lager auffinden zu können, wobei an den in einem Lager zu suchenden Objekten ebenfalls Einrichtungen angebracht sind, welche die Gegenstände kennzeichnen und die über Sendeimpulse erfaßt werden können.

Aus der WO 01/56907 A1 ist ein Verfahren und ein System zum BE- und Entladen von Lieferfahrzeugen bekannt, bei welchem Container von einer zentralen Stelle zu verschiedenen Lieferadressen transportiert werden. Die einzelnen Container weisen individuelle Kennungen auf, die von Leseeinrichtungen an Fahrbahnbrücken erfaßt werden können, wenn ein mit dem Containerbeladener Lkw unter der Fahrbahnbrücke hindurchführt. Die Steuerung bzw. Routenführung für den Lkw kann dann auf Basis der erfaßten Kennung vorgenommen werden.

Im Gegensatz dazu bezieht sich die vorliegende Erfindung allerdings auf das Ausliefern von Paketen durch Paketpostdienstleister. Es ist allgemein üblich, daß kleinere Liefermengen in Form von einzelnen Paketen, die an unterschiedliche Empfänger gehen, über einen Paketdienst oder die Post an den jeweiligen Empfänger zugestellt werden. Eine Lieferung von Waren oder Stückgütern, die in Pakete gepackt werden können, jeweils unmittelbar von einem Hersteller bzw. Anbieter zu einem Verbraucher erscheint aus der Sicht des Lieferanten nur dann lohnend, wenn es sich um sehr hochwertige Wirtschaftsgüter oder große Stückzahlen handelt, so daß die Transportkosten nicht nennenswert ins Gewicht fallen.

In der Regel bedient man sich daher beim Versenden von Waren oder sonstigen Wirtschaftsgütern an entfernte Lieferadressen eines Paket- oder Postdienstes. Ein solcher Paketdienst nimmt entweder die Pakete an einer Sammelstelle in Empfang oder holt sie auch vor Ort von dem Lieferanten ab und bringt sie selbst zu einer Sammelstelle. Dort werden die Pakete sortiert und im allgemeinen an wenige zentrale Knotenpunkte geliefert, von wo aus sie weiter verteilt werden. Schließlich gelangen die Pakete zu einem Verteiler für die Endauslieferung. An diesem Verteiler werden die Pakete in ein Lieferfahrzeug geladen, welches anschließend die einzelnen Pakete bei den jeweiligen Lieferadressen abliefert. Üblicherweise erfolgt dies mit Hilfe kleinerer Transportfahrzeuge zwischen 2 t und 7,5 t Gesamtgewicht. Dabei hat der Fahrer eines solchen Fahrzeuges üblicherweise eine mehr oder weniger festgelegte Route bzw. ein bestimmtes Liefergebiet, so daß er über den Verteiler sämtliche Pakete erhält, die er in diesem Liefergebiet abliefern muß und die er zu diesem Zweck in sein Fahrzeug lädt.

Dabei plant der Fahrer in der Regel seine Route anhand der Lieferadressen, die er von einer Liste der ihm übergebenen Pakete entnimmt.

Um beim Entladen die jeweiligen Pakete nicht allzu lange suchen zu müssen, geht der Fahrer in der Regel so vor, daß er die von dem Verteiler in einer mehr oder weniger zufälligen Weise ankommenden Pakete sortiert und so für das Beladen anordnet, daß er diejenigen Pakete, die er entsprechend seiner Route zuletzt ausliefern wird, als erstes in das Fahrzeug einlädt und umgekehrt diejenigen Pakete zuletzt in das Fahrzeug einlädt, die entsprechend der Route zuerst ausgeladen werden müssen. Der Fahrer vermeidet dadurch ein langwieriges Suchen der einzelnen Pakete beim jeweiligen Erreichen einer Lieferadresse. Allerdings muß er dafür den langwierigen Sortiervorgang in Kauf nehmen, wenn er die einzelnen Pakete vor dem Beladen in der gewünschten Reihenfolge anordnet.

Von der Verteileranlage werden die einzelnen Pakete zwar den jeweiligen Lieferfahrzeugen eindeutig zugeordnet, so daß insofern eine Vorsortierung stattfindet, jedoch ist die Verteileranlage nicht in der Lage, die Pakete entsprechend einer gewünschten Route in einer bestimmten Reihenfolge auszugeben.

Der Fahrer muß deshalb mit dem Beladen seines Fahrzeuges im allgemeinen so lange warten, bis die Verteileranlage sämtliche oder zumindest den größten Teil der Pakete ausgegeben hat, die für seinen Bezirk an dem betreffenden Tag oder während der betreffenden Tour zugestellt werden müssen und kann erst dann damit beginnen, die Pakete in der gewünschten Weise zu sortieren, um sie entsprechend der beschriebenen Vorgehensweise in das Fahrzeug einzuladen. Dies ist ein relativ zeitaufwendiger Vorgang, der einen beträchtlichen Teil der Arbeitszeit eines Auslieferfahrers in Anspruch nimmt. Bei dieser Verfahrensweise und diesem bekannten System hat man außerdem das Problem, daß bei gegebenenfalls erforderlichen Änderungen der Route, z.B. aufgrund von Baustellen und/oder Umleitungen oder wegen vordringlicher Auslieferungen, eine kurzfristige Änderung des Entladeplanes kaum oder nur mit Mühe möglich ist, so daß der Fahrer unter allen Umständen versuchen wird, die einmal festgelegte Reihenfolge bei der Anfahrt der Adressaten einzuhalten. Dabei nimmt er unter Umständen große Umwege in Kauf, nur um nicht von der Reihenfolge abweichen zu müssen, die ansonsten ein umständliches Suchen erfordern würde und in der wohlgeordneten Ablage der Pakete zu einer unübersichtlichen Unordnung führen könnte.

Gegenüber diesem Stand der Technik liegt der vorliegenden Erfindung die Aufgabe zugrunde, ein Verfahren und ein System zum Be- und Entladen von Lieferfahrzeugen zu schaffen, welches für die Ausführungen von Postdienstleistungen geeignet ist und bei welchem das aufwendige Vorsortieren entfällt und das Entladen dennoch ohne nennenswertes Suchen von Paketen vonstatten geht.

Hinsichtlich des Verfahrens wird diese Aufgabe dadurch gelöst, daß jedes Paket mit einer Kennung versehen wird, daß die Pakete in dem Lieferfahrzeug derart angeordnet werden, daß jedes einzelne Paket im wesentlichen unabhängig von den anderen Paketen für das Entladen zugänglich ist, wobei die Pakete in Regalen des Lieferfahrzeuges angeordnet werden und jedes der Regale mit einer eigenen Leseeinrichtung (12, 13) die darin angeordneten Pakete erfaßt, wobei die die Kennung jedes der Pakete von der Leseeinrichtung erfaßt und gespeichert wird und daß auch die Position der Pakete in dem Lieferfahrzeug erfaßt und der jeweiligen Paketkennung zugeordnet wird.

Hinsichtlich des entsprechenden Systems zum Be- und Entladen von Lieferfahrzeugen wird die der Erfindung zugrunde liegende Aufgabe durch die folgenden Merkmale gelöst:
- Jedes Paket weist eine Kennung auf, durch die das Paket eindeutig identifiziert wird und die vorzugsweise auch eine Information über die Zieladresse enthält,
- Beladeeinrichtungen sind vorgesehen, die mindestens eine Leseeinrichtung umfassen, welche beim oder nach dem Beladen des Lieferfahrzeuges bzw. einer Beladeeinheit des Lieferfahrzeuges mit Paketen deren Kennung und Position innerhalb des Fahrzeuges erfaßt und in einer Speichereinrichtung speichert,
- die Beladeeinrichtungen weisen Regale mit Fächern bzw. Ablagepositionen auf, in denen alle Pakete im wesentlichen unabhängig vom Beladezustand jeweils benachbarter Fächer oder Ablagepositionen für das Entladen zugänglich sind, wobei jedes der Regale eine eigene Leseeinrichtung aufweist.
- eine Anzeigevorrichtung ist vorgesehen, die bei Eingabe und/oder Erreichen einer Zieladresse die Position der (oder des) an dieser Adresse auszuliefernde Pakete(s) in der Beladeeinrichtung anzeigt.

Konkret bedeutet dies, daß Fahrer oder Beifahrer eines solchen Lieferfahrzeuges die einzelnen Pakete einfach in der Reihenfolge in das Fahrzeug laden, in der sie vom Verteilersystem ausgegeben werden bzw. in einem entsprechenden Lagersektor liegen. Dafür braucht in keiner Weise auf die Reihenfolge des Beladens geachtet werden, insbesondere muß die Reihenfolge des Beladens nicht in irgendeinem Zusammenhang mit der geplanten Fahrtroute stehen. Vielmehr ist lediglich darauf zu achten, daß die Pakete so in das Fahrzeug eingeladen werden, daß das Entladen bzw. die Entnahme eines Paketes nicht durch davor oder darüber angeordnete weitere Pakete blockiert wird. Hierzu sind entsprechende Beladeeinrichtungen vorgesehen, wie z.B. Regale beiderseits entlang der Au-ßenseite des Fahrzeuges mit einem dazwischen liegenden Mittelgang, so daß praktisch jedes in diesen Regalen aufgenommene Paket unabhängig von den anderen Paketen und von dem Beladezustand des Fahrzeugs insgesamt jederzeit entnommen werden kann.

In vorteilhafter Weise kann dabei auf die Stabilität und Fahrsicherheit des Fahrzeuges Rücksicht genommen werden, indem z.B. schwere Pakete grundsätzlich im untersten Fach bzw. auf dem Boden des Fahrzeuges unter den Regalen angeordnet werden, während leichtere Pakete weiter oben angeordnet werden können. Beim Ausliefern ist es nicht erforderlich, daß der Fahrer das an einer bestimmten Lieferadresse abzugebende Paket umständlich sucht. Vielmehr wird durch das erfindungsgemäße Verfahren und das entsprechende System jedes der Pakete identifiziert und seine Position in dem Fahrzeug erfaßt. Der Fahrer kann sich daher gezielt an die Position bzw. an das Regalfach begeben, wo sich entsprechend den erfaßten Daten das an eine Zieladresse auszuliefernde Paket befinden muß.

Dies kann durch unterschiedliche Hilfsmittel noch weiter erleichtert werden. Beispielsweise kann vorgesehen sein, daß man in ein entsprechendes, elektronisches Datenerfassungsgerät einfach die erreichte Lieferadresse eingibt, woraufhin das Gerät unmittelbar die Position des dort abzuliefernden Paketes oder auch einer Mehrzahl dort abzuliefernder Pakete in dem Lieferfahrzeug anzeigt. Einfacher ist es noch, wenn der Fahrer zusammen mit allen geladenen Paketen eine Liste dieser Pakete mit laufenden Nummern erhält, wobei die Reihenfolge im Prinzip beliebig ist, vorzugsweise die Liste jedoch nach Lieferadressen entweder entlang einer üblichen Fahrtroute oder aber alphabetisch geordnet ist. In diesem Fall braucht lediglich die laufende Nummer eingegeben zu werden, die neben der jeweils erreichten Zieladresse steht, woraufhin das System die Position des auszuliefernden Paketes in dem Fahrzeug anzeigt.

Eine andere, besonders bevorzugte Variante ist die Kombination mit einem Navigationssystem. Das Navigationssystem erfaßt die aktuelle Position eines Fahrzeuges, wobei die Zieladressen durch die Leseeinrichtung automatisch erfaßt wurden und mit der Position gemäß Navigationssystem verglichen werden können. Es versteht sich, daß die Lieferadressen dann in einem Format gespeichert sein oder gegebenenfalls umgewandelt werden müssen, welches mit den entsprechenden Daten des Navigationssystems verglichen werden kann, oder umgekehrt. Der Fahrer fährt dann einfach seine übliche Route ab und, sobald er sich an einer Zieladresse befindet oder sich dieser Zieladresse näher1, bekommt er automatisch vom Navigationssystem gemeldet, daß hier ein (oder mehrere) Paket abzuliefern ist und wo dieses Paket in dem Fahrzeug abgelegt, d. h. zum Beispiel in welchem Regal und in welchem Fach es sich befindet.

Weitere Hilfsmittel, die das Auffinden der jeweils auszuliefernden Pakete erleichtern, sind z.B. Leuchtdioden oder Leuchtleisten, die unmittelbar an entsprechender Stelle im Fahrzeug die verschiedenen Positionen der Pakete kennzeichnen. Beispielsweise kann jedes der Regalfächer mit einer über die Front verlaufenden Leuchtleiste oder mehreren Leuchtdioden versehen sein, die bei Aufleuchten jeweils anzeigen, daß ein in diesem Fach bzw. in dem darüberliegenden oder darunterliegenden Fach das auszuliefernde Paket angeordnet ist. Die Regalfächer können im übrigen z.B. über eine in dem Fahrzeug verlegte Busleitung mit einem Bordcomputer in dem Fahrzeug verbunden sein, der sämtliche Daten speichert und auswertet und auch die entsprechenden Anzeigen auslöst.

Als zusätzliche Kontrolle erhält der Fahrer zusammen mit den üblichen Lieferunterlagen, das heißt Lieferscheinen und Quittungen, beispielsweise eine Diskette oder eine Magnetkarte oder ein sonstiges Speicherelement, auf dem sämtliche Daten der von ihm auszuliefernden Pakete gespeichert sind, wobei er diese Speicherkarte oder dergleichen einfach in den Bordcomputer des Fahrzeuges einschiebt, welches dann in der besonders bevorzugten Ausführungsform der Erfindung automatisch eine bevorzugte Fahrtroute berechnet und auf einem Display die Reihenfolge der beispielsweise mit laufenden Nummern gekennzeichneten Pakete angibt, in welcher sie auf dieser Route auszuliefern sind. Diese Speicherkarte kann z.B. an der Verteilerstation erstellt werden, an welcher die betreffenden Pakete ausgegeben werden. Allerdings erfaßt das System bereits selbst automatisch neben den Paketpositionen im Fahrzeug auch sämtliche Kennungen der Pakete, d. h. im allgemeinen auch die Lieferadressen, so daß das System auch auf dieser Basis bereits ein optimierte Fahrtroute berechnen und vorschlagen kann.

Zweckmäßigerweise werden die Pakete schon bei Aufgabe zur Post bzw. bei dem Paketdienst oder spätestens an einer Sammelstation mit entsprechenden Kennungen versehen. Diese Kennungen können z.B. Barcodes oder, was im vorliegenden Fall bevorzugt ist, Transponder sein. Transponder haben den Vorteil, daß sie permanent erfaßbar sind und abgefragt werden können, solange sie sich in der Nähe einer entsprechenden Abfrageantenne befinden, unabhängig von der genauen Orientierung und Lage des Transponders.

Dies bedeutet, daß die einzelnen Pakete zum Beispiel während des Vorbeilaufens auf einem Förderband mit ihrer Kennung vollständig erfaßt werden können, so daß das Erstellen einer elektronischen Datei mit allen Daten der für ein Lieferfahrzeug vorgesehenen Pakete sehr einfach und praktisch automatisch erfolgen kann. Dies geschieht unabhängig auch in dem Fahrzeug zur Erfassung der Paketpositionen (und deren Kennung).

In der bevorzugten Ausführungsform bestehen die Beladeeinrichtungen aus fahrbaren Regalen. Diese können aus dem Fahrzeug herausgefahren und an der Verteilerstation direkt mit den dort ankommenden bzw. zwischengelagerten Paketen beladen werden, ohne daß auf eine besondere Reihenfolge geachtet werden muß. Die Regale sind zweckmäßigerweise so ausgestaltet, daß sie den Platz in dem Fahrzeug optimal ausnutzen und sicher im Fahrzeug zu befestigen bzw. zu verriegeln sind. Außerdem haben die Regale der bevorzugten Ausführungsform Fächer, in denen vorzugsweise segmentierte Antennen integriert sind. Weiterhin sind Anzeigevorrichtungen wie z.B. Leuchtleisten an den Vorderkanten der einzelnen Regalfächer vorgesehen. Jedes Regal weist noch eine Kommunikationsverbindung mit dem Bordcomputer auf, die im einfachsten Fall aus einem Stecker für eine Busleitung besteht, wobei die Busleitung dann auch entsprechende Steuerleitungen für die Antennen zum Abfragen der einzelnen Positionen in dem Regal haben sollte. Alternativ kann jedoch auch jedes Regal mit einer eigenen Erfassungseinrichtung vorgesehen sein, die der Reihe nach über sämtliche segmentierte Antennen des Regals die einzelnen Regalpositionen abfragt und die dort jeweils gelagerten Pakete bzw. deren Transponder identifiziert und die entsprechend erfaßten Daten dann über die Busleitung an den zentralen Rechner weitergibt.

Dabei hat selbstverständlich auch jedes einzelne Regal eine bestimmte Identifikation bzw. Kennung. Es versteht sich, daß das erfindungsgemäße System nicht auf die Verwendung für Postdienstleistungen beschränkt ist, sondern daß es grundsätzlich in allen Situationen mit ähnlicher Aufgabenstellung verwendet werden kann, das heißt überall dort, wo mehrere verschiedene Gegenstände oder Stückgüter an unterschiedlichen Zielorten abzuliefern sind und bei der Aufnahme in ein Lieferfahrzeug oder dergleichen nicht entsprechend einer Entladereihenfolge sortiert sind.

Weiterhin versteht es sich, daß im einzelnen sehr viele unterschiedliche Methoden verwendet werden können, um die einzelnen Pakete mit einer Kennung zu versehen und diese Kennung zu lesen sowie die Position des mit dieser Kennung versehenen Paketes zu erfassen. Anstelle von Barcodes oder Transpondern könnten hier auch Magnetstreifen oder andere optische Leseeinrichtungen verwendet werden können. Im Regelfall wird man diejenigen Kennungssysteme bevorzugen, die einerseits eine sichere Identifizierung und Lokalisierung garantieren und gleichzeitig relativ einfach und preiswert zu verwenden und anzubringen sind.

Alternativ wäre es beispielsweise auch möglich, z.B. im Falle der Verwendung von Barcodes diese Barcodes alle zur Frontseite eines Regals hin auszurichten und mit einem tragbaren Lesegerät, welches an den Regalen bzw. den Paketen mit dem Barcode vorbeigeführt wird, die Position und Identität aller Pakete zu erfassen, wobei zweckmäßigerweise die aktuelle Position bzw. Ausrichtung des Lesegerätes bei der Erfassung eines Barcodes ebenfalls registriert wird und auf diese Weise ebenfalls eine schnelle Lokalisierung und Identifikation einzelner Pakete vorgenommen werden kann.

Anstelle von Busleitungen mit entsprechenden Schnittstellen können selbstverständlich auch drahtlose Kommunikationsverbindungen zwischen den einzelnen Fächern oder Regalen und einem Bordcomputer (im Fahrzeug) oder dergleichen vorgesehen sein. Der Bordcomputer kann auch ein Notebook oder anderer tragbarer Computer sein.

Schließlich ist auch die Verbindung mit einem externen Rechner möglich, der zum einen die bereits beschriebenen Aufgaben des Bordcomputers im Fahrzeug wahrnehmen kann, zum anderen aber auch der Überwachung, Kontrolle und Koordinierung mehrerer Fahrzeuge dienen kann.

Für ein umfangreiches System ist es zweckmäßig, eine Hierarchie mehrerer Rechner bzw. Computer zu verwenden. An oberster Stelle der Hierarchie befindet sich im allgemeinen ein Zentralcomputer, der auch Hostcomputer genannt wird, und bei dem alle Daten zusammenlaufen und verarbeitet werden. Konkret laufen auf einem solchen Hostcomputer beispielsweise die Programme für die Erfassung eines Transportauftrages, die Planung einer Tour entsprechend den anzufahrenden Lieferadressen, die aus Paketaufklebern erfaßt und ermittelt werden, und ein Archivierungs- und Auskunftssystem, um eine Sendung komplett verfolgen zu können. Außerdem erfolgt auch die Erstellung von Rechnungen und deren Versand zweckmäßigerweise über den Hostcomputer. Ein weiterer Computer, der auch Kommunikationsserver genannt wird, übernimmt Aufgaben der Vorsortierung, der Zusammenfassung und Weiterleitung von Daten, z.B. von den zunächst in einer Umschlaghalle oder dergleichen aufgestellten Regalwagen, die anschließend in einen LKW verfahren werden. Schon während des Beladens der einzelnen Regalwagen werden die Positionen der Pakete in den Regalwagen erfaßt, wobei auch die Regalwagen selbst durch entsprechende Kennungen unterscheidbar sind. Auch diese Daten werden zweckmäßigerweise an den Hostcomputer übermittelt, und zwar entweder durch Kabel oder über Funk. Bei kleineren Unternehmen kann der Hostcomputer auch die Aufgaben des Kommunikationsservers mit übernehmen.

Weiterhin ist, wie bereits erwähnt, in der bevorzugten Ausführungsform der Erfindung ein Bordcomputer auf jedem Lieferfahrzeug vorgesehen, der im Prinzip autark sein kann, wenn er die Informationen über die Anordnung der Pakete und die Zielorte und die Route erhält. Der Bordcomputer ist aber in der Regel über ein GSM- oder GPRS-System mit dem Hostcomputer verbunden. Er zeigt dem Fahrer die zu fahrende Tour mit der Reihenfolge der Lieferadressen an, ebenso zeigt er auch die verladenen Regalwagen und alle Pakete und deren Lagerpositionen auf den Regalwagen bzw. der Ladefläche an. Weiterhin ist der Bordcomputer mit dem Datenbus des Lieferfahrzeuges und der Regalwagen verbunden und er kann insbesondere auch mit einer GPS-Funktion ausgestattet sein, so daß der Bordcomputer gleichzeitig auch immer über die aktuelle Position des Fahrzeuges informiert ist und damit sowohl die nächste Haltestelle als auch das Erreichen der Haltestelle und die dort auszuliefernden Pakete anzeigen kann, ohne daß es einer besonderen Abfrage bedarf.

Weiterhin kann dieser Bordcomputer noch eine Schnittstelle zu einem mobilen Computer oder Handgerät aufweisen.

Der mobile Computer oder das mobile Handgerät zeigt ebenso wie der Bordcomputer sowohl die Position der Pakete als auch Name und Anschrift eines Kunden auf einem eigenen Display an. Damit hat der Fahrer eine mobile Informationsquelle in der Hand und braucht sich nicht die auf einem Bildschirm des Bordcomputers angezeigte Paketposition zu merken, wenn er diese aus den Regalwagen entnehmen will. Schließlich kann dieser mobile Computer bzw. dieses Handgerät auch der sogenannten Ablieferscannung bei der Übergabe des Paketes an einen Kunden dienen. Dabei wird mit dem mobilen Computer nochmals ein Barcode oder Transponder oder sonstige Kennung des Paketes erfaßt und der Kunde kann dann den Empfang unmittelbar auf dem Display quittieren. Diese Daten werden dann über die Schnittstelle an den Bordcomputer und von dort an den Hostcomputer übertragen. Damit steht in der Zentrale sofort ein Liefernachweis zur Verfügung und kann bei Bedarf via Internet oder über andere Kommunikationsmittel direkt an den Absender des Paketes gemeldet werden.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: schematisch den Beladevorgang eines Lieferfahrzeuges,
- Figur 2: ebenfalls schematisch ein fahrbares Regal für die Aufnahme in einem solchen Fahrzeug und
- Figur 3: eine schematische Schnittansicht von oben auf ein mit entsprechenden Regalen bestücktes Fahrzeug.

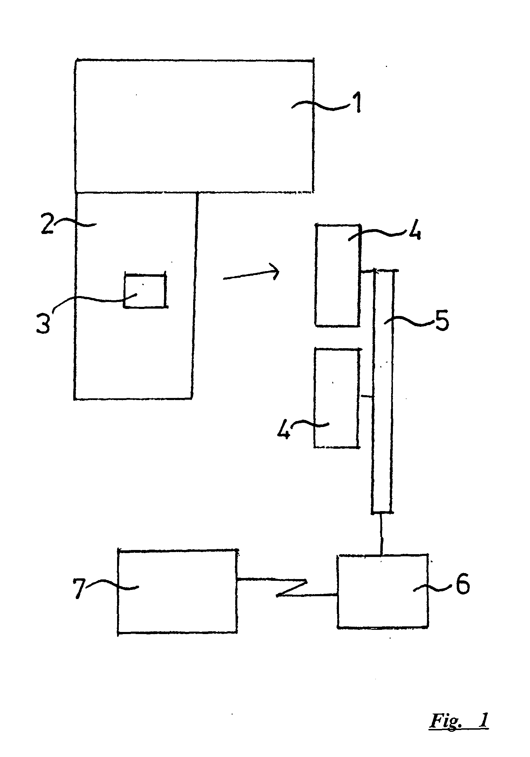

Man erkennt in Figur 1 eine Paketsortieranlage 1, die Pakete verteilt, welche von größeren LKWs, per Bahn oder Flugzeug von einer entfernten Sammelstation her angeliefert werden. In der Paketsortieranlage 1 werden die Pakete in der Weise sortiert, daß über verschiedene Paketrutschen 2, von denen hier der Einfachheit halber nur eine dargestellt ist, diejenigen Pakete 3 ausgegeben werden, die für einen Lieferbezirk bestimmt sind, der durch ein einzelnes Lieferfahrzeug 11 bedient wird. Diese Pakete 3 kommen in einer im Prinzip beliebigen Reihenfolge über die Paketrutschen 2 an und sammeln sich am unteren Ende dieser Paketrutsche oder werden in einem für das betreffende Lieferfahrzeug 11 vorgesehenen Bereich gestapelt oder zwischengelagert.

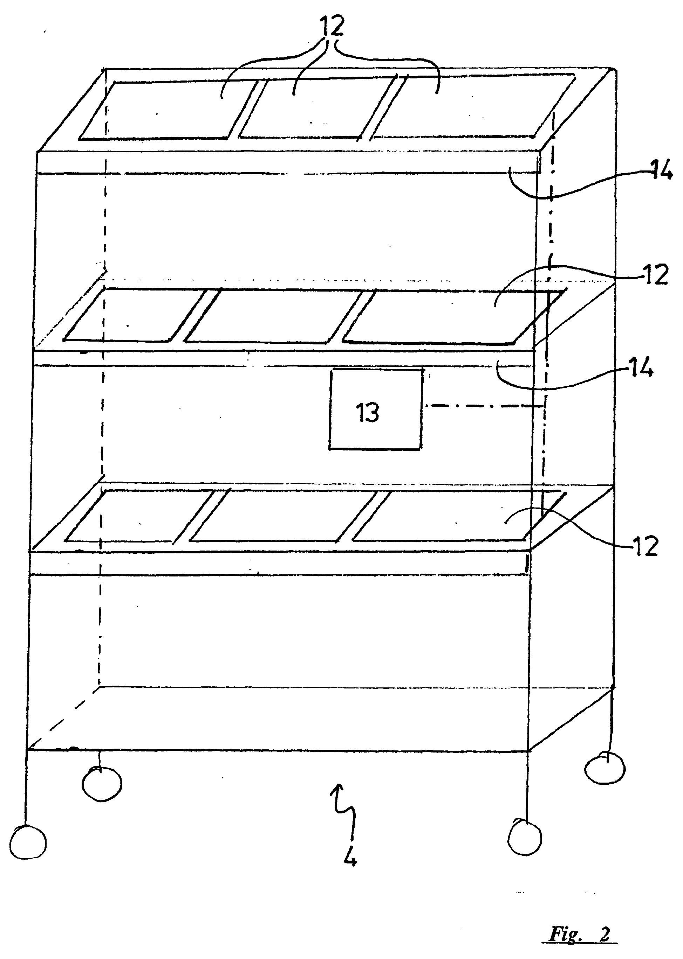

Sobald alle Pakete 3 für den betreffenden Lieferbezirk und für eine bestimmte Lieferfahrt über die Rutsche 2 ausgegeben worden sind, kann der Fahrer die Pakete in sein Fahrzeug laden, indem er einzelne Regalwagen 4, von denen einer in Figur 2 beispielhaft dargestellt ist, mit den jeweiligen Paketen belädt. Gemäß der vorliegenden Erfindung braucht der Fahrer jedoch nicht abzuwarten, bis die Paketsortieranlage 1 über die Rutsche 2 sämtliche Pakete 3 ausgegeben hat, die für sein Fahrzeug bestimmt sind, sondern er kann sofort zu Beginn der Ausgabe der ersten Pakete an dem Verteiler mit dem Beladen beginnen, da es auf die Reihenfolge des Beladens der einzelnen Regale mit den Paketen 3 nicht ankommt. Er wird dabei lediglich auf die Stabilität der einzelnen Regalwagen und damit auch des Lieferfahrzeuges achten, indem er schwere Pakete tunlichst in den unteren Fächern der Regalwagen lagert und leichte Pakete oben anordnet.

Wie man in Figur 2 erkennt, besteht ein Regalwagen 4 aus mehreren Fächern, wobei in den einzelnen Fachböden segmentierte Antennen 12 angeordnet sind, die mit einer Abfrageeinheit 13 verbunden sind, welche als Datenkonzentrator und Übertragungseinrichtung dient.

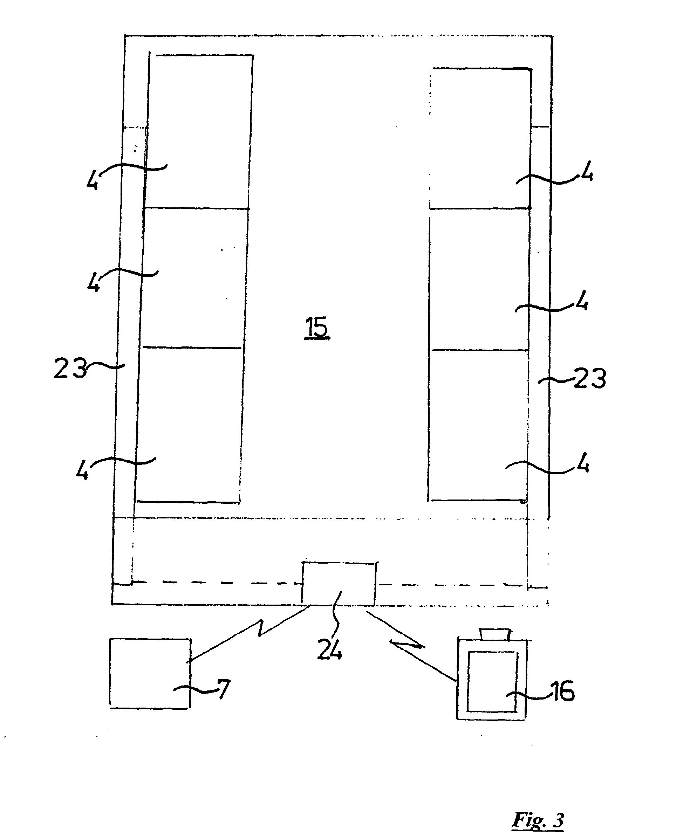

Die Abfrageeinheit 13 ist in der Lage, die einzelnen Antennensegmente 12 unabhängig zu betätigen bzw. zu erregen, um einen im Bereich der jeweiligen Antenne 12 angeordneten Transponder zu erfassen und zu einer Antwort anzuregen, die alle wesentlichen Daten des Paketes enthält, an welchem der betreffende Transponder angebracht ist. Diese Daten umfassen vor allem die Lieferadresse und den Empfänger des Paketes und gegebenenfalls auch andere Informationen, die für den Empfänger oder den Postdienstleister von Bedeutung sein können. Die Abfrageeinheit 13 gibt dann die Information über die Paketkennung und die Position des Pakets entsprechend dem jeweiligen Antennensegment 12 über die Busleitung 23 des Fahrzeuges an einen Bordcomputer 24 weiter. Gemäß Figur 3 kann dieser Bordcomputer 24 seine Daten gegebenenfalls auch mit einem Hostcomputer 7 und einem mobilen Computer 16 mit Codeleser austauschen.

Figur 3 zeigt eine schematische Schnittansicht von oben auf den Ladebereich eines entsprechenden Lieferfahrzeuges, wo auf beiden Seiten eines Mittelganges 15 jeweils drei Regale 4 angeordnet sind, die über die Busleitung 23 mit dem Bordcomputer 24 verbunden sind. Jedes der Regale 4 weist, wie in Figur 2 dargestellt, eine Leuchtleiste 14 an der Kante jedes der Regalböden auf, die z.B. aus mindestens einer Leuchtdiode oder einer Lampe für jedes der Antennensegmente 12 besteht, im vorliegenden Fall also mindestens drei individuell ansteuerbare Leuchtelemente enthält. Selbstverständlich können auch zwei oder mehr Leuchtelemente für jedes Segment vorgesehen sein, was insbesondere dann zweckmäßig ist, wenn die auszuliefernden Gegenstände kleiner sind als die einer segmentierten Antenne zugeordnete Fläche, so daß unter Umständen in einem Antennensegment auch mehrere verschiedene Gegenstände bzw. Pakete liegen können, die entsprechend demselben Segment zugeordnet sind, wobei die Anzahl der aufleuchtenden Dioden oder Leuchtelemente der Anzahl der dort zu entnehmenden Gegenstände entspricht.

Mit dem erfindungsgemäßen System wird das Beladen entsprechender Liefer-LKWs beträchtlich beschleunigt, da das aufwendige Vorsortieren entsprechend einer Fahrtroute entfällt. Die Fahrtroute kann bei Bedarf beliebig verändert werden, ohne daß - abgesehen von einer gegebenenfalls verlängerten Fahrtzeit - die Auslieferung der Pakete dadurch verzögert wird, daß Pakete gesucht werden müßten. Vielmehr wird dem Fahrer bei Erreichen einer Zieladresse sofort mittels der Leuchtdioden oder Leuchtelemente an den Regalen angezeigt, wo sich das betreffende auszuliefernde Paket oder auch mehrere auszuliefernde Pakete befinden, so daß er sofort ohne längeres Suchen darauf Zugriff hat. Auch die Verwendung der Regalwagen kann den Beladevorgang enorm beschleunigen. Die Kommunikationseinrichtungen sind im Prinzip austauschbar und es können hierfür viele verschiedene Varianten verwendet werden, ohne deshalb von dem Grundgedanken der vorliegenden Erfindung abzuweichen.

## Patentansprüche

1. Verfahren zum Be- und Entladen von Lieferfahrzeugen, welche Pakete (3) oder dergleichen von einem Verteiler (1) zu mehreren verschiedenen Lieferadressen transportieren, wobei die Pakete (3) in einer zufälligen Reihenfolge am Verteiler (1) bereitgestellt werden, wobei jedes der Pakete (3) mit einer Kennung versehen wird, die Pakete (3) in dem Lieferfahrzeug (11) derart angeordnet werden, daß jedes einzelne Paket (3) im wesentlichen unabhängig von den anderen für das Entladen zugänglich ist und die Kennung jedes der Pakete (3) beim oder nach dem Beladen des Lieferfahrzeuges (11) bzw. einer Beladeeinrichtung (4) des Lieferfahrzeuges (11) von einer Leseeinrichtung (12, 13) zusammen mit der Positionierung des Paketes (3) in dem Lieferfahrzeug (11) erfaßt wird, **dadurch gekennzeichnet, daß** die Pakete in Regalen angeordnet werden und jedes der Regale mit einer eigenen Leseeinrichtung (12, 13) die darin angeordneten Pakete erfaßt.

2. Verfahren nach Anspruch 1, **dadurch gekennzeichnet, daß** die Pakete in Fächern an gegenüberliegenden Wänden des Laderaums eines Lieferfahrzeuges angeordnet werden.

3. Verfahren nach einem der Ansprüche 1 oder 2, **dadurch gekennzeichnet, daß** die von der Leseeinrichtung (12, 13) erfaßten Daten in einem Bordcomputer des Fahrzeugs gespeichert werden.

4. Verfahren nach einem der Ansprüche 1 bis 3, **dadurch gekennzeichnet, daß** die Kennung der Pakete jeweils auch den Zielort eines Paketes umfaßt.

5. Verfahren nach einem der Ansprüche 1 bis 4, **dadurch gekennzeichnet, daß** durch Eingabe eines Zielorts in eine Eingabeeinrichtung die Position eines oder mehrerer für diesen Zielort bestimmter Pakete von dem Bordcomputer abfragbar ist.

6. Verfahren nach Anspruch 3 oder einem der auf Anspruch 3 rückbezogenen Ansprüche, **dadurch gekennzeichnet, daß** der Bordcomputer mit einem Navigationssystem in Verbindung steht, wobei ein Abgleich der Daten erfaßter Zielorte mit den Daten des Navigationssystems erfolgt.

7. Verfahren nach einem der Ansprüche 1 bis 6, **dadurch gekennzeichnet, daß** das Entladen von Paketen aus dem Lieferfahrzeug an einem Zielort entsprechend einer Anzeigerichtung erfolgt, die die Position eines oder mehrerer an diesem Zielort zu entladender Pakete angibt.

8. Verfahren nach einem der Ansprüche 1 bis 7, **dadurch gekennzeichnet, daß** jedes Paket beim Absenden vom Ausgangsort oder bei der Abgabe an einer Sammelstelle mit einer Kennungseinrichtung, wie z.B. einem Transponder oder einem Barcode versehen wird, der neben einer eindeutigen Identifikationskennzeichnung vorzugsweise auch die Zielortdaten enthält.

9. System zum Be- und Entladen von Lieferfahrzeugen (11), die Pakete (3) von einem Verteiler (1) zu mehreren verschiedenen Lieferadressen transportieren, wobei die Pakete (3) in einer im allgemeinen zufälligen Reihenfolge von dem Verteiler ausgegeben werden, **gekennzeichnet durch** mit den folgenden Merkmalen:
- Jedes Paket (3) weist eine Kennung auf, **durch** die das Paket eindeutig identifiziert wird und die vorzugsweise auch eine Information über die Zieladresse enthält,
- die Beladeeinrichtungen(4) weisen Fächer bzw. Ablagepositionen auf, in denen alle Pakete (3) im wesentlichen unabhängig vom Beladezustand jeweils benachbarter Fächer oder Ablagepositionen für das Entladen zugänglich sind,
- eine Anzeigevorrichtung (14) ist vorgesehen, die bei Eingabe und/oder Erreichen einer Zieladresse die Position der (oder des) an dieser Adresse auszuliefernde Pakete(s) (3) in der Beladeeinrichtung (4) anzeigt, **dadurch gekennzeichnet**, daß - Beladeeinrichtungen(4) in Form von Regalen vorgesehen sind, die mindestens eine Leseeinrichtung (12, 13) umfassen, welche beim oder nach dem Beladen des Lieferfahrzeuges (11) bzw. der Beladeeinrichtungen (4) des Lieferfahrzeuges(11) mit Paketen deren Kennung und Position innerhalb des Fahrzeuges erfaßt und in einer Speichereinrichtung speichert.

10. System nach Anspruch 9, **dadurch gekennzeichnet, daß** die Beladeeinrichtungen Regale beiderseits eines Mittelganges im Laderaum eines Mietfahrzeuges sind.

11. System nach Anspruch 10, **dadurch gekennzeichnet, daß** die Regale in die Fahrzeuge ein- und ausfahrbar sind.

12. System nach einem der Ansprüche 10 oder 11, **dadurch gekennzeichnet, daß** die Regale in dem Laderaum des Lieferfahrzeuges fixierbar sind.

13. System nach einem der Ansprüche 9 bis 12, **dadurch gekennzeichnet, daß** an den Paketen zwecks Kennung Transponder und/oder Barcodes vorgesehen sind.

14. System nach einem der Ansprüche 9 bis 13, **dadurch gekennzeichnet, daß** die Regale eine integrierte Anzeigeeinrichtung z.B. in Form einer Leuchtleiste bzw. mehrerer Leuchtdioden aufweisen.

15. System nach Anspruch 12 oder einem der auf Anspruch 12 rückbezogenen Ansprüche, **dadurch gekennzeichnet, daß** in dem Fahrzeug mindestens eine Busleitung mit Steckanschlüssen vorgesehen ist und daß die Kommunikationseinrichtungen der Regale entsprechende Steckanschlüsse für die Verbindung mit der Busleitung aufweisen.

16. System nach einem der Ansprüche 9 bis 15, **dadurch gekennzeichnet, daß** ein tragbares Lesegerät für die Kennungseinrichtung vorgesehen ist, welches drahtlos mit dem Bordcomputer im Fahrzeug kommuniziert.

17. System nach einem der Ansprüche 9 bis 16, **dadurch gekennzeichnet, daß** ein Navigationssystem vorgesehen ist, welches mit dem Bordcomputer verknüpft ist.

18. System nach einem der Ansprüche 9 bis 17, **dadurch gekennzeichnet, daß** jedes der Regalfächer mehrere Leseantennen für das Erfassen von Transpondern aufweist, die im Bereich dieser Antenne angeordnet sind, wobei jeder Antenne mindestens ein Anzeigeelement an dem betreffenden Regalfach zugeordnet ist.

19. System nach Anspruch 18, **dadurch gekennzeichnet, daß** die Anzeigeeinrichtung durch eine oder mehrere Leuchtdioden gebildet wird.

## Claims

1. A method of loading and unloading delivery vehicles which transport parcels (3) or the like from a distributor (1) to a plurality of different delivery addresses, wherein the parcels (3) are prepared in a random sequence at the distributor (1), wherein each of the parcels (3) is provided with an identification, the parcels (3) are arranged in the delivery vehicle (11) in such a way that each individual parcel (3) is accessible for unloading substantially independently of the others and the identification of each of the parcels (3) is detected upon or after loading of the delivery vehicle (11) or a loading device (4) of the delivery vehicle (11) by a reading device (12, 13) together with positioning of the parcel (3) in the delivery vehicle (11), **characterised in that** the parcels are arranged in shelves and each of the shelves detects the parcels arranged therein with its own reading device (12, 13).

2. A method according to claim 1 **characterised in that** the parcels are arranged in compartment at opposite walls of the load space of a delivery vehicle.

3. A method according to one of claims 1 and 2 **characterised in that** the data detected by the reading device (12, 13) are stored in an on-board computer of the vehicle.

4. A method according to one of claims 1 to 3 **characterised in that** the identification of the parcels also includes the respective destination of a parcel.

5. A method according to one of claims 1 to 4 **characterised in that** by virtue of the input of a destination into an input device the position of one or more parcels intended for said destination can be interrogated by the on-board computer.

6. A method according to claim 3 or one of the claims appendant to claim 3 **characterised in that** the on-board computer is connected to a navigation system, wherein a comparison of the data of detected destinations with the data of the navigation system is effected.

7. A method according to one of claims 1 to 6 **characterised in that** the unloading of parcels from the delivery vehicle at a destination is effected in accordance with a display device specifying the position of one or more parcels to be unloaded at that destination.

8. A method according to one of claims 1 to 7 **characterised in that** upon despatch from the departure location or upon deposit at a collecting location each parcel is provided with an identifier device such as for example a transponder or a bar code which besides a clear identifying identification preferably also includes the destination data.

9. A system for loading and unloading delivery vehicles (11) which transport parcels (3) from a distributor (1) to a plurality of different delivery addresses, wherein the parcels (3) are issued by the distributor in a generally random sequence, comprising the following features :
- each parcel (3) has an identification by which the parcel is clearly identified and which preferably also includes information about the destination address,
- the loading devices (4) have compartments or deposit positions in which all parcels (3) are accessible for unloading substantially independently of the loading condition of respectively adjacent compartments or deposit positions, and
- there is provided a display device (14) which upon the input and/or the attainment of a destination address displays the position of the parcel or parcels (3) to be delivered at that address in the loading device (4),
**characterised in that**
- there are provided loading devices (4) in the form of shelves which include at least one reading device (12, 13) which upon or after loading of the delivery vehicle (11) or the loading devices (4) of the delivery vehicle (11) with parcels detects the identification and position thereof within the vehicle and stores same in a memory device.

10. A system according to claim 9 **characterised in that** the loading devices are shelves on both sides of a central passageway in the load space of a rental vehicle.

11. A system according to claim 10 **characterised in that** the shelves can be moved into and out of the vehicles.

12. A system according to one of claims 10 and 11 **characterised in that** the shelves can be fixed in the load space of the delivery vehicle.

13. A system according to one of claims 9 to 12 **characterised in that** transponders and/or bar codes are provided on the parcels for the purposes of identification.

14. A system according to one of claims 9 to 13 **characterised in that** the shelves have an integrated display device, for example in the form of a light strip or a plurality of light emitting diodes.

15. A system according to claim 12 or one of the claims appendant to claim 12 **characterised in that** at least one bus bar with plug connections is provided in the vehicle and that the communication devices of the shelves have corresponding plug connections for connection to the bus bar.

16. A system according to one of claims 9 to 15 **characterised in that** there is provided a portable reading unit for the identification device, which communicates wirelessly with the on-board computer in the vehicle.

17. A system according to one of claims 9 to 16 **characterised in that** there is provided a navigation system linked to the on-board computer.

18. A system according to one of claims 9 to 17 **characterised in that** each of the shelf compartments has a plurality of reading antennae for the detection of transponders which are arranged in the region of said antenna, wherein associated with each antenna is at least one display element on the shelf compartment in question.

19. A system according to claim 18 **characterised in that** the display device is formed by one or more light emitting diodes.

## Revendications

1. Procédé de chargement et de déchargement de véhicules de livraison qui transportent des paquets (3) ou analogues d'un distributeur (1) à plusieurs adresses de livraison différentes, les paquets (3) étant préalablement placés dans un ordre aléatoire chez le distributeur (1), chacun des paquets (3) étant doté d'une caractéristique, les paquets (3) étant disposés dans le véhicule de livraison (11) de telle sorte que chaque paquet individuel (3) est accessible sensiblement indépendamment des autres en vue du déchargement et la caractéristique de chacun des paquets (3) étant détectée lors du chargement ou après le chargement du véhicule de livraison (11) respectivement d'un dispositif de chargement (4) du véhicule de livraison (11) par un dispositif de lecture (12, 13) conjointement avec le positionnement du paquet (3) dans le véhicule de livraison (11), **caractérisé en ce que** les paquets sont placés dans des rayons et chacun des rayons est doté d'un dispositif de lecture propre (12, 13) qui détecte les paquets placés dans les rayons.

2. Procédé selon la revendication 1, **caractérisé en ce que** les paquets sont placés dans des compartiments au niveau de parois opposées de l'espace de chargement d'un véhicule de livraison.

3. Procédé selon l'une des revendications 1 ou 2, **caractérisé en ce que** les données détectées par le dispositif de lecture (12, 13) sont mémorisées dans un ordinateur de bord du véhicule.

4. Procédé selon l'une des revendications 1 à 3, **caractérisé en ce que** la caractéristique des paquets comporte également chacune la destination d'un paquet.

5. Procédé selon l'une des revendications 1 à 4, **caractérisé en ce que** la position d'un paquet ou de plusieurs paquets, destinés à une destination, peuvent être interrogés par l'ordinateur de bord par saisie de cette destination dans un dispositif d'entrée.

6. Procédé selon la revendication 3 ou l'une des revendications dépendant de la revendication 3, **caractérisé en ce que** l'ordinateur de bord est en liaison avec un système de navigation, une adaptation des données des destinations détectées au données du système de navigation étant effectuée.

7. Procédé selon l'une des revendications 1 à 6, **caractérisé en ce que** le déchargement de paquets du véhicule de livraison à une destination est effectué conformément à un sens d'indication qui indique la position d'un paquet ou de plusieurs paquets à décharger à cette destination.

8. Procédé selon l'une des revendications 1 à 7, **caractérisé en ce que** chaque paquet est doté, lors de l'expédition depuis le lieu de départ ou lors de la délivrance à un endroit de collecte, d'un dispositif de reconnaissance, comme par exemple un transpondeur ou un code à barres, qui contient aussi avantageusement, en plus d'une caractéristique d'identification univoque, les données de destination.

9. Système de chargement et de déchargement de véhicules de livraison (11) qui transportent des paquets (3) d'un distributeur (1) à plusieurs adresses de livraison différentes, les paquets (3) étant délivrés par le distributeur dans un ordre général aléatoire, ledit système présentant les caractéristiques suivantes :
- chaque paquet (3) comporte une caractéristique qui permet d'identifier de façon univoque le paquet et qui contient aussi avantageusement une information sur l'adresse de destination,
- les dispositifs de chargement (4) comportent des compartiments respectivement des positions de rangement dans lesquels tous les paquets (3) sont accessibles en vue du déchargement sensiblement indépendamment de l'état de chargement des compartiments adjacents ou des positions de rangement adjacentes,
- un dispositif d'indication (14) étant destiné à indiquer, lorsqu'une adresse de destination est saisie et/ou atteinte, la position du paquet ou des paquets (3) à livrer à cette adresse dans le dispositif de chargement (4),
**caractérisé en ce que** les dispositifs de chargement (4) sont sous forme de rayons qui comportent au moins un dispositif de lecture (12, 13) qui détecte, lors du chargement ou après le chargement du véhicule de livraison (11) respectivement des dispositifs de chargement (4) du véhicule de livraison (11) avec des paquets, la caractéristique de ces paquets et leur position à l'intérieur du véhicule et les mémorise dans un dispositif de mémorisation.

10. Système selon la revendication 9 , **caractérisé en ce que** les dispositifs de chargement sont des rayons situés des deux côtés d'un passage central dans l'espace de chargement d'un véhicule de location.

11. Système selon la revendication 10, **caractérisé en ce que** des rayons peuvent être insérés dans les véhicules ou en être retirés.

12. Système selon l'une des revendications 10 ou 11, **caractérisé en ce que** des rayons peuvent être fixés dans l'espace de chargement du véhicule de livraison.

13. Système selon l'une des revendications 9 à 12, **caractérisé en ce que** les paquets sont dotés d'un transpondeur et/ou d'un code à barres comme caractéristique.

14. Système selon l'une des revendications 9 à 13, **caractérisé en ce que** les rayons comportent un dispositif d'indication intégré se présentant par exemple sous la forme d'une barre lumineuse respectivement de plusieurs diodes luminescentes.

15. Système selon la revendication 12 ou l'une des revendications dépendant de la revendication 12, **caractérisé en ce que** dans le véhicule au moins un bus est doté de prises enfichables et **en ce que** les dispositifs de communication des rayons comportent des prises enfichables correspondantes pour la liaison au bus.

16. Système selon l'une des revendications 9 à 15, **caractérisé en ce qu'**il comporte un appareil de lecture transportable pour la reconnaissance qui communique sans fil avec l'ordinateur de bord du véhicule.

17. Système selon l'une des revendications 9 à 16, **caractérisé en ce qu'**il comporte un système de navigation qui est combiné à l'ordinateur de bord.

18. Système selon l'une des revendications 9 à 17, **caractérisé en ce que** chacun des compartiments de rayon comporte plusieurs antennes de lecture pour la détection de transpondeurs qui sont disposés dans la région de ces antennes, au moins un élément d'indication au niveau du compartiment de rayon correspondant étant associé à chaque antenne.

19. Système selon la revendication 18, **caractérisé en ce que** le dispositif d'indication est formé par une ou plusieurs diodes luminescentes.
